# EUROPÄISCHE PATENTANMELDUNG

(11) **EP 2 191 707 A2**
(43) Veröffentlichungstag der Anmeldung: **02.06.2010**
(21) Anmeldenummer: 09401024.6
(22) Anmeldetag: 27.10.2009
(51) Int. Cl.: A01C 17/00

(54) **Abstellvorrichtung für eine Dreipunktanbaumaschine.**

(30) Priorität: 03.11.2008 DE 102008054338
(71) Anmelder: Amazonen-Werke H. Dreyer GmbH & Co. KG, 49205 Hasbergen (DE)
(72) Erfinder: Johannaber, Jan Stefan, 49536 Lienen (DE)

(57) **Zusammenfassung**

Abstellvorrichtung für eine Dreipunktanbaumaschine, insbesondere Verteilmaschine, wobei die Abstellvorrichtung jeweils im seitlichen Bereich der Maschine an deren Rahmen mittels einer Gelenkanordnung angeordnete und um eine in Fahrtrichtung verlaufende Gelenkachse zwischen einer Abstellposition und zumindest einer Nichtabstellposition verschwenkbare Abstellstützen aufweist, wobei die Abstellstützen in der Abstell- und Nichtabstellposition mittels Arretierungselementen arretierbar sind. Um , eine Abstellvorrichtung zu schaffen, die in einfacher Weise, ohne das der Bediener unter die Maschine treten muss, in einer Abstell- und eine Nichtabstellposition gebracht werden kann, ist vorgesehen, dass die Arretierungselemente zum Arretieren der Abstellstützen in der Abstellposition derart ausgebildet sind, dass die in Abstellposition gebrachten Abstellstützen nach dem Aufstehen auf der Abstellfläche durch die Arretierungselemente durch weiteres Absenken der Dreipunktanbaumaschine gegenüber den Abstellstützen in ihrer Abstellposition durch die Relativbewegung in aufrechter Richtung zwischen Dreipunktanbaumaschine und Abstellstützen arretierbar sind.

## Beschreibung

Die Erfindung betrifft eine Abstellvorrichtung für eine Dreipunktanbaumaschine gemäß des Oberbegriffes des Patentanspruches 1.

Eine derartige Abstellvorrichtung ist beispielsweise durch die EP 0 250 817 B1 bekannt. Diese Abstellvorrichtung ist für einen Zentrifugaldüngerstreuer vorgesehen, und weist auf jeder Seite des Rahmens der Anbaumaschine mittels Gelenklaschen schwenkbar angeordnete Abstellstützen auf, die um eine in Fahrtrichtung verlaufende Achse nach unten in eine Abstellposition und nach oben in eine Nichtabstellposition verschwenkt werden können. Mittels Absteckbolzen lassen sich die Abstellstützen in der jeweiligen Position verriegeln. Hierzu ist es jedoch erforderlich, dass der Bediener sich jeweils zum Verriegeln bzw. zum Entriegeln der Abstellstützen unter die Maschine begeben und sich hiermit evtl. Unfallgefahren aussetzen muss.

Der Erfindung liegt die Aufgabe zugrunde, eine Abstellvorrichtung zu schaffen, die in einfacher Weise, ohne das der Bediener unter die Maschine treten muss, in einer Abstell- und eine Nichtabstellposition gebracht werden kann.

Diese Aufgabe wird erfindungsgemäß dadurch gelöst, dass die Arretierungselemente zum Arretieren der Abstellstützen in der Abstellposition derart ausgebildet sind, dass die in Abstellposition gebrachten Abstellstützen nach dem Aufstehen auf der Abstellfläche durch die Arretierungselemente durch weiteres Absenken der Dreipunktanbaumaschine gegenüber den Abstellstützen in ihrer Abstellposition durch die Relativbewegung in aufrechter Richtung zwischen Dreipunktanbaumaschine und Abstellstützen arretierbar sind.

Infolge dieser Maßnahmen werden die Abstellstützen in einfacher Weise zumindest in ihrer Abstellposition durch das Absenken der Dreipunktanbaumaschine und der hierdurch hervorgerufenen Relativbewegung zwischen Abstellstützen und Dreipunktanbaumaschine, wenn die Abstellstützen den Boden berühren, automatisch in ihrer Abstellposition verriegelt.. Zum Verriegeln braucht der Bediener der Maschine also keine zusätzlichen Verriegelungsarbeiten, wie z.B. das Einstecken eines Verriegelungsbolzen durchführen. Die Verriegelung ist allein durch die Formschlussverbindung bei der auf dem Boden abgestellten Maschine gewährleistet.

Um in einfacher Weise eine Relativbewegung der Abstellstützen zu dem Rahmen der Dreipunktanbaumaschine zu ermöglichen, um hierdurch eine automatische Verriegelung der Arretierungselemente zum Verriegeln der Abstellstütze in der Abstellposition zu erreichen, ist vorgesehen, dass die am Rahmen befestigten Gelenkhülsen der Gelenke der Gelenkanordnung als sich in aufrechter Richtung erstreckende Langlöcher ausgebildet sind, dass die Arretierungselemente zwischen den Abstellstützen und dem Rahmen angeordnet sind.

Eine einfache und vorteilhafte Anordnung der Arretierungselemente ergibt sich in einer bevorzugten Ausführungsform dadurch, dass die Arretierungselemente vorzugsweise im oberen Bereich der Gelenke zwischen den Abstellstützen und dem Rahmen angeordnet sind.

Eine einfache Ausgestaltung der Arretierungselemente zum automatischen Verriegeln der Abstellstützen gegenüber dem Rahmen der Anbaumaschine lässt sich dadurch erreichen, dass Arretierungselemente aus zwei zueinander verriegelbaren Teilelemente bestehen, von denen eines zumindest eine Aussparung aufweist, in die zumindest ein der Kontur der Aussparung entsprechende, als Erhebung ausgebildetes Ansatzelement fasst und die Abstellstütze in der Abstellposition verriegelt.

Um eine äußerst einfache und kompakte Ausgestaltung der verschwenkbaren Anordnung der Abstellstützen, sowie eine einfache Ausgestaltung und kompakte Anordnung der Verriegelungselemente zum Verriegeln der Abstellstützen gegenüber dem Rahmen zu schaffen, ist vorgesehen, dass die Gelenkhülsen in ihrem oberen Bereich eine Aussparung aufweisen, dass die der Gelenkhülse zugeordnete Gelenkabschnitt ein der Kontur der Aussparung der Gelenkhülse entsprechende, als Erhebung ausgebildetes Ansatzelement aufweist, welches in der verriegelten Abstellposition der Abstellstützen in diese Aussparung fasst.

Um auch bei schräger Stellung der Dreipunktanbaumaschine, wenn diese sich auf einem schrägen Grund befindet und dort abgestellt werden soll sowie gleichzeitig eine Selbstzentrierung zur automatischen Verriegelung der Abstellstützen in ihrer Abstellposition durch das Absenken der Dreipunktanbaumaschine gegenüber den Abstellstützen zu erreichen, ist vorgesehen, dass das Ansatzelement und die Aussparungen in zusammenwirkender Weise selbstzentrierend ausgestaltet sind.

Eine einfache selbstzentrierende Ausgestaltung der Verriegelungselemente lässt sich dadurch erreichen, dass das Ansatzelement und die Aussparung jeweils eine entsprechende keilförmige Ausgestaltung aufweisen.

Um in einfacher Weise die Abstellstützen in die jeweilige Position verschwenken zu können, ohne das der Bediener unter die Maschine treten muss, ist vorgesehen, dass den Abstellstützen ein hebelförmiges Schwenkelement mit einem Handgriffelement zugeordnet ist.

Um in einfacher Weise die Abstellstützen in der Nichtabstellposition festsetzen zu können, ist vorgesehen, dass mittels des Schwenkelementes die Abstellstützen in der Nichtabstellposition gegenüber dem Rahmen mittels geeigneter Festsetzmittel festsetzbar sind.

Eine vorteilhafte Anordnung des Schwenkhebels zum Erreichen dessen Handgriffelementes ist vorgesehen, dass das Handgriffelement des Schwenkhebels in einem gut erreichbaren Außenbereich der Maschine angeordnet ist.

Um die Dreipunktanbaumaschine, wenn sie auf den Abstellstützen in deren verriegelten Position abgestellt ist, an verschiedene Orte schieben zu können, ist vorgesehen, dass den Abstellstützen Rollen und/oder Laufräder zugeordnet sind.

Weitere Einzelheiten der Erfindung sind der Beispielsbeschreibung und den Zeichnungen zu entnehmen. Hierbei zeigen
- Fig. 1: eine Verteilmaschine in der Seitenansicht mit Abstellstützen in der Abstellposition,
- Fig. 2: die in Fahrtrichtung linke Seite der Verteilmaschine gemäß Fig. 1 in der Ansicht II - II,
- Fig. 3: die Abstellstütze der in Fahrtrichtung gesehen linken Seite in perspektivischer Darstellung und vergrößertem Maßstab,
- Fig. 4: die Anordnung der Abstellstützen in Abstellposition gemäß Fig. 1 in perspektivischer Darstellung und in Teilansicht,
- Fig. 5: die hintere Lagerung der Abstellstützen an der Verteilmaschine gemäß Fig. 4 in vergrößertem Maßstab,
- Fig. 6: die Lagerung der Abstellstützen in der Ansicht II - II in vergrößertem Maßstab,
- Fig. 7: die vordere Lagerung der Abstellstütze in der Ansicht VII-VII in Abstellposition in vergrößertem Maßstab,
- Fig. 8: die Abstellstütze in Zwischenposition zu Beginn des Abhebens von Boden in der Ansicht entsprechend Fig. 6,
- Fig. 9: die Lagerung der Abstellstützen nach dem Abheben vom Boden in der Ansicht gemäß Fig. 6,
- Fig. 10: die Anordnung der Abstellstützen in hochgeklappter Stellung in perspektivischer Darstellung gemäß Fig. 4,
- Fig. 11: die hintere Anordnung und Lagerung der Abstellstützen in der Ansicht gemäß der Fig. 10, jedoch in vergrößertem Maßstab und
- Fig. 12: die hintere Lagerung der Abstellstütze entsprechend Fig. 11 in der Ansicht II - II.

Die Verteilmaschine ist als Zentrifugaldüngerstreuer ausgebildet. Der Zentrifugaldüngerstreuer weist den Vorratsbehälter 1, den Rahmen 2 sowie die als Scheibenstreuwerk 3 ausgebildete Verteileinrichtung auf. Im unteren Bereich des Vorratsbehälters 1 ist in nicht dargestellter und bekannter Weise eine einstellbare Dosiereinrichtung, die als mit einem Schieber in ihrer Öffnungsweite einstellbare Auslauföffnung aufgebildet ist, angeordnet. Über die Dosiereinrichtung wird das sich im Vorratsbehälter 1 befindliche Material, beispielsweise Dünger, dem Zentrifugalstreuwerk 3 in einstellbaren Mengen zugeführt.

An dem Rahmen 2 sind auf der Vorderseite die Dreipunktkupplungselemente angeordnet, über welche die Verteilmaschine an den Dreipunktkraftheber eines Schleppers in bekannter Weise anzukuppeln ist.

Beidseitig des Rahmens 2 sind Abstellstützen 4 angeordnet.

Die Abstellstützen 4 weisen jeweils einen in Fahrtrichtung 5 verlaufenden Rohrträger 6 auf, an dessen vorderen Ende die um eine aufrechte Achse verschwenkbaren Lenkrolle 7 und auf der Rückseite über einen Tragarm 8 die Laufrolle 9 angeordnet ist.

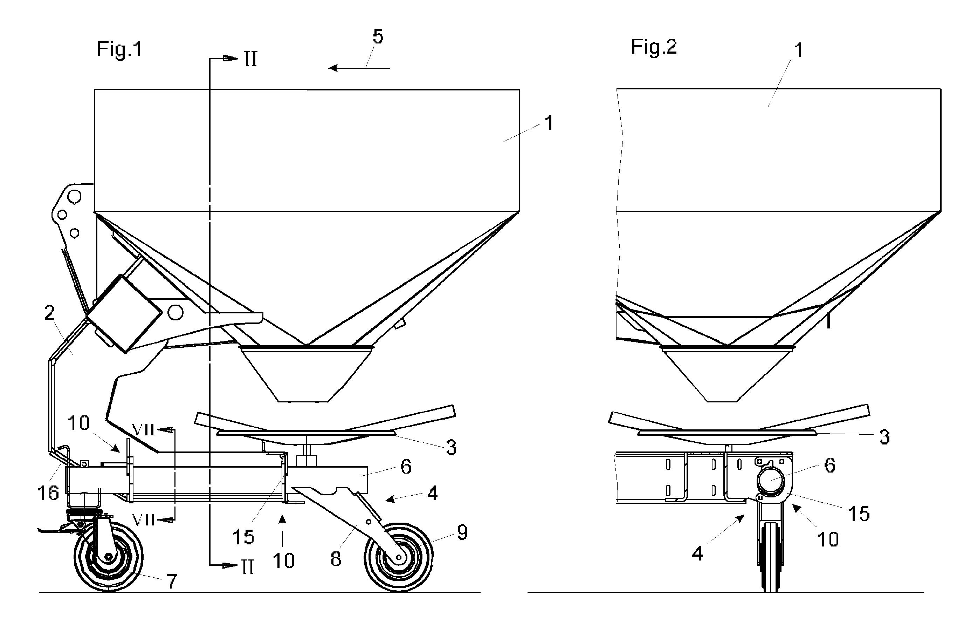

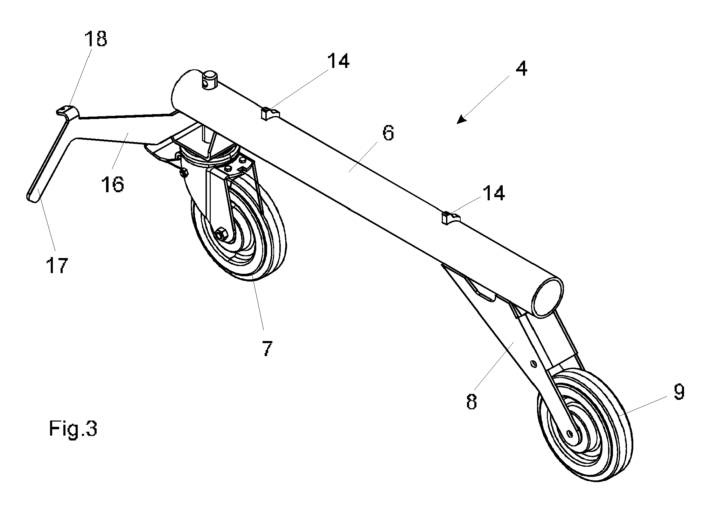

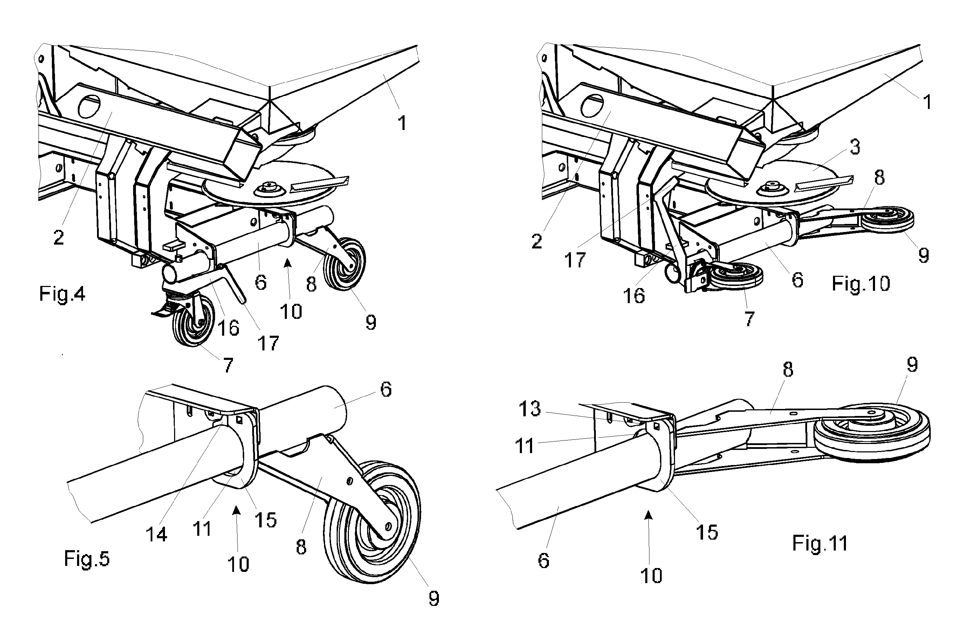

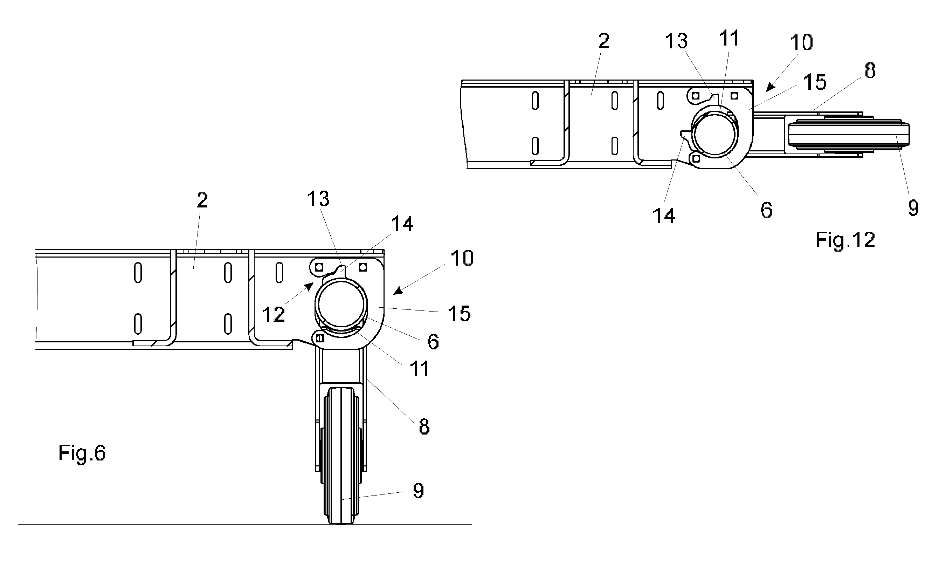

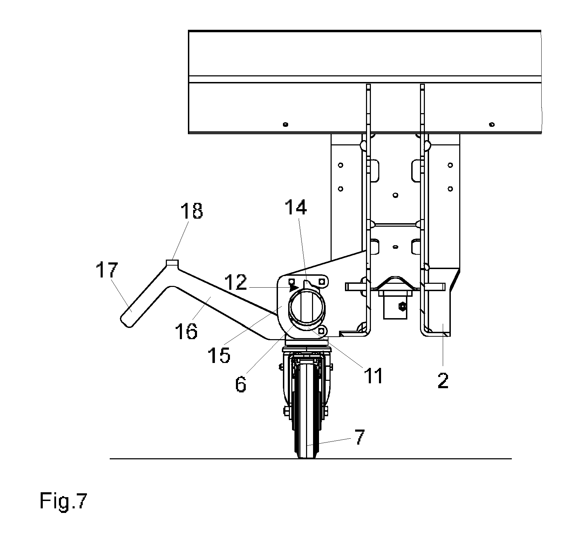

Der rohrförmige Träger 6 der Abstellstütze 4 ist mittels Gelenkhalterungen 10 am Rahmen 2 der Verteilmaschine angeordnet. Zur sicheren Befestigung und Anordnung der Abstellstützen 4 sind die beiden Gelenkhalterungen 10 beabstandet zueinander angeordnet. Die Abstellstützen 4 sind über das rohrförmige Tragrohr und die Gelenke der Gelenkhalterungen 10, um eine in Fahrtrichtung 5 verlaufende Gelenkachse zwischen der in den Fig. 1 bis 7 dargestellten Abstellposition in die in den Fig. 10 bis 12 dargestellte nach oben geklappte Nichtabstellposition bringbar.

Die Gelenkhalterungen 10, die an dem Rahmen 2 angeordnet sind, weisen ein sich in aufrechter Richtung erstreckendes Langloch 11 auf, in welchem der rohrförmige Längsträger 6 der Abstellstützen 4 verschwenkbar angeordnet ist.

Zwischen dem Längsträger 6 der Abstellstützen 4 und den Gelenkhalterungen 10, die an dem Rahmen 2 angeordnet sind, sind die Abstellstützen 4 in ihrer Abstellposition arretierende Arretierungselemente 10 angeordnet.

Damit die Abstellstützen 4 gemäß der Gelenkanordnung um die in Fahrtrichtung 5 verlaufende Achse in den Langlöchern 11 der Gelenkhalterungen 10 verschwenkt werden können, weisen die Abstellstützen 4 zumindest in diesem Bereich, d.h. im Bereich der Gelenke der Gelenkanordnungen einen runden Querschnitt aufweisenden Abschnitt auf. Im Ausführungsbeispiel ist der Längsträger 6 durchgehend von einem einen runden Querschnitt aufweisenden Rohr ausgebildet.

Die Arretierungselemente 12 sind um Ausführungsbeispiel im oberen Bereich der Gelenke zwischen Gelenkhalterung 10 angeordnet.

Die Arretierungselemente 12 bestehen aus zwei zueinander verriegelbaren Teilelementen 13 und 14, wobei eines eine Aussparung 13 aufweist, in die ein der Kontur der Aussparung 13 entsprechendes, als Erhebung ausgebildetes Ansatzelement 14 fasst und die Abstellstütze 4 dann in der Abstellposition verriegelt, welches nachfolgend noch näher beschrieben wird. Die Aussparung 13 ist im Ausführungsbeispiel an der Gelenkhalterung 10 Gelenkträger angeordnet, während die Erhebung 14 sich an dem rohrförmigen Längsträger 6 der Abstellstütze 4 befindet.

Die Gelenkhalterung 10 weist in ihrem oberen Bereich am oberen Ende des Langloches 10 die Aussparung 13 auf, die keilförmig bzw. V-förmig sich nach unten öffnend ausgestaltet ist. Diese Aussparung 13 befindet sich an einem mittels einer als Schraubverbindung ausgebildete Befestigungselement an der Gelenkhalterung 10 befestigten Formelement 15, welches die seitliche Öffnung des Langloches 11, welches sich in der Gelenkhalterung befindet, verschließt.

Die sich an dem Längsträger 6 befindlichen Ansatzelemente 14 sind als Erhebung ausgebildet. Die jeweilige Erhebung 13 fasst in der verriegelten Abstellposition der Abstellstützen 4 in die jeweilige Aussparung 13. Um eine in jeder Betriebslage eine sichere Verriegelung der Abstellstützen 4 in der Verriegelungsposition, d.h. in der Abstellposition zu gewährleisten, sind die vorbeschriebenen Aussparungen 13 und Erhebungen 14 beiden Gelenkhalterungen 10 zugeordnet.

Durch die jeweils V-förmig bzw. keilförmig ausgestaltet Aussparung 13 bzw. Ansatzelement 14 ist sichergestellt, dass das Ansatzelement 14 und die Aussparung 13 in zusammenwirkender weise selbstzentrierend ausgestaltet sind und entsprechend zusammenwirken.

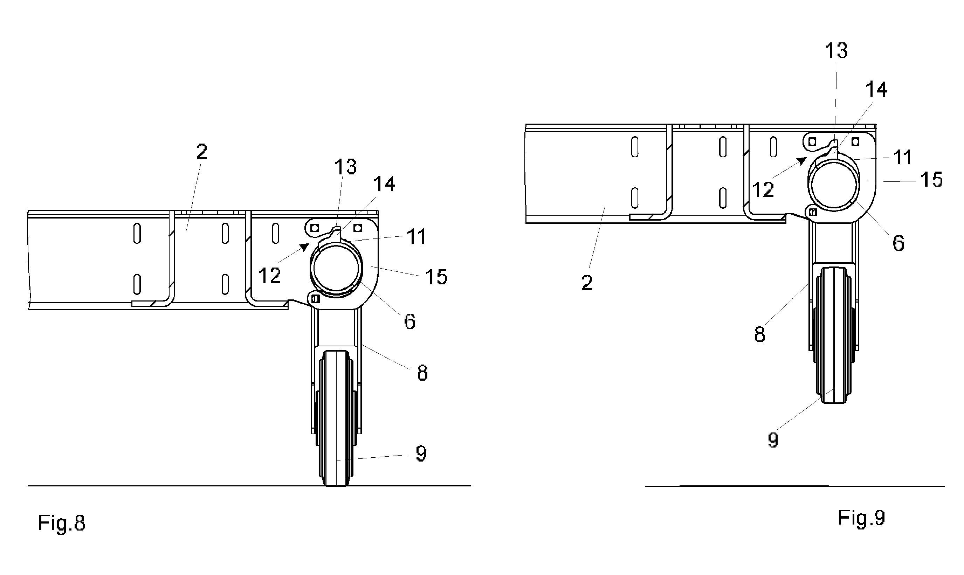

Wenn die Verteilmaschinen über den Dreipunkkraftheber angehoben ist, werden die Abstellstützen 4 entriegelt, wie Fig. 8 und 9 zeigen, so dass aufgrund der Schwerpunktlage der Abstellstützen 4 die Laufräder 7 und 9 nach unten weisen und das rohrförmige Tragrohr 6 an der Unterseite des Langloches 11 der Gelenkhalterung 10 jeweils anliegt. Wenn nun die Verteilmaschine über den Dreipunktkraftheber abgesenkt wird, findet eine Relativbewegung zwischen den Abstellstützen 4 und den am Rahmen 2 angeordneten Gelenkhalterung 10 statt, so dass das jeweilige Ansatzelement 14 in die jeweilige Aussparung 13 fasst und hierdurch die Abstellstütze 4 gegenüber dem Rahmen 2 in der jeweilige Abstellposition 13 verriegelt. Durch das Gewicht der Verteilmaschine ist bei auf dem Boden abgesetzter und vom Dreipunktkraftheber abgekuppelter Maschine somit eine sichere Abstellung der Verteilmaschine auf den Abstellstützen 4 in der verriegelten Abstellposition der Abstellstützen 4 sichergestellt.

Wenn die Maschine für den Einsatzfall vorbereitet wird, müssen während des Einsatzes der Maschine sich die Abstellstützen 4 in Nichtabstellposition befinden. Hierzu wird die Verteilmaschine über den Dreipunktkraftheber und den Dreipunktkupplungselementen der Verteilmaschine an den Dreipunktkraftheber des Schleppers angekuppelt. Anschließend wird die Maschine von dem Dreipunktkraftheber vom Boden abgehoben und die Abstellstützen fallen über in Fig. 8 dargestellte Zwischenposition in die in der Fig. 9 dargestellten Position nach unten, so dass die Verriegelung zwischen dem Ansatzelement 14 und der Aussparung 13 aufgehoben wird. Die Abstellstützen 4 können dann aus der in Fig. 9 dargestellten Position in die in den Fig. 10 und 11 dargestellten Nichtabstellposition verschwenkt werden. Um die Abstellstützen 4 in der Nichtabstellposition zu verriegeln und bequem in diese Position zu verschwenken, ist an dem rohrförmigen Längsträger 6 auf dessen Vorderseite ein hebelförmiges Schwenkelement 16 mit dem Handgriffelement 17 angeordnet, wie die Zeichnungen zeigen. Mittels des Schwenkelementes 16 können die Abstellstützen aus der Abstellposition gemäß Fig. 1 bis 7 in die Nichtabstellposition gemäß der Fig. 10 und 11 verschwenkt werden. An den hebelförmigen Schwenkelement 16 ist ein Arretierungsmittel 18 angeordnet, welches in eine an dem Rahmen der Maschine angeordnetes Rastelement fasst. Das Rastelement des Rahmens 2 zusammen mit dem Arretierungselement 18 des Schwenkelementes 16 bilden das Festsetzmittel.

Das Handgriffelement 17 des Schwenkelementes 16 ist in einem gut erreichbaren Außenbereich der Maschine angeordnet, wie die Zeichnungen zeigen.

## Patentansprüche

1. Abstellvorrichtung für eine Dreipunktanbaumaschine, insbesondere Verteilmaschine, wobei die Abstellvorrichtung jeweils im seitlichen Bereich der Maschine an deren Rahmen mittels einer Gelenkanordnung angeordnete und um eine in Fahrtrichtung verlaufende Gelenkachse zwischen einer Abstellposition und zumindest einer Nichtabstellposition verschwenkbare Abstellstützen aufweist, wobei die Abstellstützen in der Abstell- und Nichtabstellposition mittels Arretierungselementen arretierbar sind, **dadurch gekennzeichnet, dass** die Arretierungselemente (12,13,14) zum Arretieren der Abstellstützen (4) in der Abstellposition derart ausgebildet sind, dass die in Abstellposition gebrachten Abstellstützen nach dem Aufstehen auf der Abstellfläche durch die Arretierungselemente (12,13,14) durch weiteres Absenken der Dreipunktanbaumaschine gegenüber den Abstellstützen (4) in ihrer Abstellposition durch die Relativbewegung in aufrechter Richtung zwischen Dreipunktanbaumaschine (2) und Abstellstützen (4) arretierbar sind.

2. Abstellvorrichtung nach Anspruch 1, **dadurch gekennzeichnet, dass** die Abstellstützen (4,6) zumindest in Bereich der Gelenke der Gelenkanordnung (10) einen runden Querschnitt aufweisenden Abschnitt aufweisen, dass die am Rahmen (2) befestigten Gelenkhülsen (10) der Gelenke der Gelenkanordnung als sich in aufrechter Richtung erstreckende Langlöcher (11) ausgebildet sind, dass die Arretierungselemente (12,13,14) zwischen den Abstellstützen und dem Rahmen (2) angeordnet sind.

3. Abstellvorrichtung nach Anspruch 2, **dadurch gekennzeichnet, dass** die Arretierungselemente (12,13,14) vorzugsweise im oberen Bereich der Gelenke zwischen den Abstellstützen (4) und dem Rahmen (2) angeordnet sind.

4. Abstellvorrichtung nach einem oder mehreren der vorstehenden Ansprüche, **dadurch gekennzeichnet, dass** Arretierungselemente (12) aus zwei zueinander verriegelbare Teilelemente (13,14) bestehen, von denen eines zumindest eine Aussparung (13) aufweist, in die zumindest ein der Kontur der Aussparung (13) entsprechende, als Erhebung ausgebildetes Ansatzelement (14) fasst und die Abstellstütze (14) in der Abstellposition verriegelt.

5. Abstellvorrichtung nach einem oder mehreren der vorstehenden Ansprüche, **dadurch gekennzeichnet, dass** die Gelenkhülsen (10) in ihrem oberen Bereich eine Aussparung (13) aufweisen, dass die der Gelenkhülse zugeordnete Gelenkabschnitt ein der Kontur der Aussparung (13) der Gelenkhülse entsprechende, als Erhebung ausgebildetes Ansatzelement (14) aufweist, welches in der verriegelten Abstellposition der Abstellstützen (4) in diese Aussparung fasst.

6. Abstellvorrichtung nach einem oder mehreren der vorstehenden Ansprüche, **dadurch gekennzeichnet, dass** das Ansatzelement (14) und die Aussparungen (13) in zusammenwirkender Weise selbstzentrierend ausgestaltet sind.

7. Abstellvorrichtung nach einem der vorstehenden Ansprüche , **dadurch gekennzeichnet, dass** das Ansatzelement (14) und die Aussparung (13) jeweils eine entsprechende keilförmige Ausgestaltung aufweisen.

8. Abstellvorrichtung nach einem oder mehreren der vorstehenden Ansprüche, **dadurch gekennzeichnet, dass** den Abstellstützen (4) ein hebelförmiges Schwenkelement (16) mit einem Handgriffelement (17) zugeordnet ist.

9. Abstellvorrichtung nach Anspruch 8, **dadurch gekennzeichnet, dass** mittels des Schwenkelementes (16) die Abstellstützen (4) in der Nichtabstellposition gegenüber dem Rahmen (2) mittels geeigneter Festsetzmittel (18) festsetzbar sind.

10. Abstellvorrichtung nach Anspruch 8, **dadurch gekennzeichnet, dass** das Handgriffelement (17) des Schwenkhebels (16) in einem gut erreichbaren Außenbereich der Maschine angeordnet ist.

11. Abstellvorrichtung nach einem oder mehreren der vorstehenden Ansprüchen, **dadurch gekennzeichnet, dass** den Abstellstützen (4) Rollen und/oder Laufräder (7,9) zugeordnet sind.
